## Europäisches Patentamt
## European Patent Office
## Office européen des brevets

(11) Numéro de publication: **0 055 792**
**A1**

# DEMANDE DE BREVET EUROPEEN

(21) Numéro de dépôt: **81104033.6**

(22) Date de dépôt: **26.05.81**

(51) Int. Cl.³: **A 21 B 1/10**

(30) Priorité: **17.11.80 IT 3317480 U**

(43) Date de publication de la demande:
**14.07.82 Bulletin 82/28**

(84) Etats contractants désignés:
**DE FR GB**

(71) Demandeur: **MORETTI FORNI S.n.c.**
**S.S. Adriatica, 232**
**I-61035 Marotta (Pesaro)(IT)**

(72) Inventeur: **MORETTI FORNI S.n.c.**
**S.S. Adriatica, 232**
**I-61035 Marotta (Pesaro)(IT)**

(74) Mandataire: **Maschio, Stefano**
**44, via Milite Ignoto**
**I-61100 Pesaro(IT)**

(54) **Four pour pâtisserie, boulangerie ou rôtisserie avec chambre de cuisson à chauffage uniforme par d'échangeurs de chaleur distribués à l'intérieur.**

(57) Le four en objet est doté d'échangeurs de chaleur placés directement à l'intérieur de la chambre de cuisson, distribués uniformément sur les deux côtés et éventuellement sur la paroie postérieure.

Les échangeurs, constitués par des tubes métalliques verticaux 5, sont parcourus à leur interne par des gaz chauds produits par un brûleur 8 à gaz-oil ou semblables. Les gaz ne sont pas en contact avec les substances à cuire, qui ainsi ne prendront pas de mauvaises odeurs.

FIG.1

Four pour pâtisserie, boulangerie et rôtisserie en général, avec chambre de cuisson à chauffage uniforme par
l'intermédiaire d'échangeurs de chaleur distribués à
l'interne, alimentés de gaz chauds produits par un brûleur à gaz-oil et semblables.

La découverte en objet concerne un four pour pâtisserie, boulangerie et rôtisserie en général, avec chambre de cuisson à chauffage uniforme par l'intermédiaire d'échangeurs de chaleur distribués à l'interne, alimentés par des gaz chauds produits par un brûleur à
gaz-oil et semblables. Avec la disposition adoptée on
obtient une très bonne distribution de chaleur à l'intérieur du four, une dispersion de chaleur minimale,
air propre dans la chambre de cuisson, grande simplicité constructive et de manutention.

Les fours actuellement utilisés pour pâtisserie, boulangerie et rôtisserie et semblables sont en principe
dotés d'un brûleur avec échangeur de chaleur placé
en-dehors de la chambre du four, sur les côtés ou au-
dessus. L'air chaud est convoyé vers une paroie du
four et aspiré dans celle opposée, ou descend du haut
vers le bas poussé par un ventilateur centrifuge.

Avec une telle disposition la température dans le
four n'est pas uniforme et des précautions particulières doivent être adoptées pour distribuer la chaleur
dans une mesure égale sur les pièces à cuire, comme
celle de donner un mouvement rotatif continu au chariot de cuisson. Toutefois on n'obtient pas de résul-

- 2 -

tats parfaits mais on augmente la complexité constructive et l'encombrement du tout.

Dans la découverte en objet, de tels inconvénients ont
été évités en disposant les échangeurs de chaleur directement à l'intérieur du four, uniformément distribués
sur les deux côtés et éventuellement sur la paroie postérieure, en plus ou à la place des latéraux. Les échangeurs, constitués de tubes métalliques verticaux, sont
parcourus à l'interne de gaz chauds produits par un brûleur à gaz-oil ou semblables. Les gaz chauds sont poussés le long du parcours préétabli par un ventilateur ou
tout autre dispositif approprié.

De telle façon on obtient une distribution parfiate de
la chaleur à l'intérieur du four tout en permettant de
maintenir fixe le chariot de cuisson, une grande simplicité constructive, une dispersion de chaleur et un
encombrement minimaux. Les gaz brûlés ne sont absolument pas en contacte avec les substances à cuire, qui
ainsi ne prendront pas de mauvaises odeurs.

Les dessins allégués illustrent à titre d'exemple la
découverte en objet.

La fig. 1 représente le four en section verticale divisé en son centre par une parallèle aux paroies latérales.

La fig. 2 représente la section transversale correspnndante, exécutée par un plan horizontal en correspondan-

- 3 -

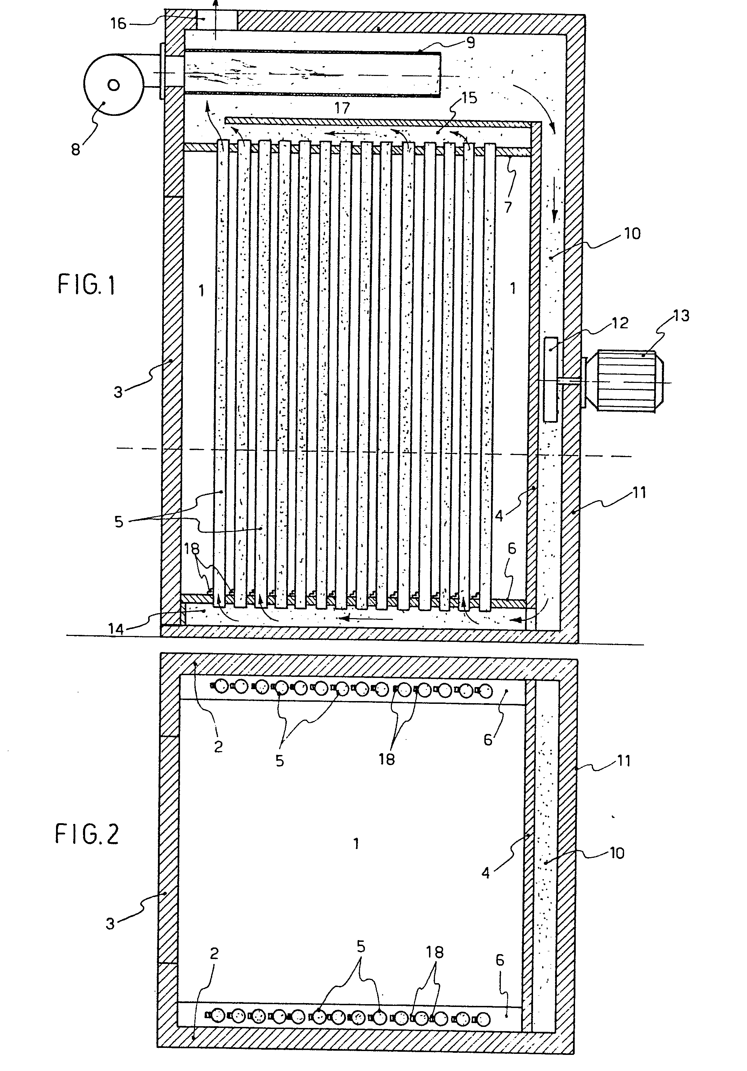

ce à la ligne hachurée de la fig. 1.

Sur de telles figures le chiffre 1 indique la chambre du four, dans laquelle est inséré le chariot de cuisson. La chambre 1 est délimitée par les parois latérales 2, isolée thermiquement, par la porte antérieure 3 et par la paroie du fond 4.

Des tubes métalliques verticaux 5 sont disposés sur les deux côtés de la chambre 1, à égale distance l'un de l'autre. Ces tubes ont leur extrémité inférieure rattachée sur les supports de base 6 et celle supérieure sur le plan 7. Les tubes 5 sont réchauffés par les gaz chauds qui passent à l'intérieur d'eux et cèdent la chaleur directement à la chambre du four, à l'intérieur de laquelle ils sont disposés.

Les gaz chauds, produits par le brûleur 8, sont injectés en pression à travers le tube 9, en acier inoxidable ou en tout autre matériau apte à ce but, et sont dirigés vers l'interstice 10, prévu entre la paroie postérieure 4 de la chambre 1 et la paroie postérieure 11 de l'entière structure. Les gaz chauds, poussés vers le bas par le ventilateur 12 actionné par le moteur 13, arrivent à la chambre inférieure 14, qui fait de collecteur pour distribuer les gaz mêmes à l'intérieur des tubes 5. Les gaz ressortent ensuite au-dehors par la partie supérieure des tubes et confluent dans le collecteur de réception supérieur constitué par la chambre 15.

- 4 -

Une partie des gaz est évacuée à travers la sortie 16 attachée à la cheminée, alors que la partie restante est remise en circulation à travers la chambre 17. Ces gaz se chauffent de nouveau en léchant la surface externe du tube 9 et refroidissent en même temps le tube même.

Evidemment le trou de sortie 16 sera disposé à l'endroit où les gaz ont la température mineure.

Les gaz brûlés ne circulent pas dans la chambre de cuisson et ne donnent donc pas de mauvaises odeurs aux substances cuites. Une seconde cheminée peut être prévue, communiquant avec la chambre du four, pour permettre la sortie de l'humidité. Le brûleur sera commandé par un dispositif automatique qui permettra de maintenir la température constante à la valeur préfixée, réglable à volonté.

Les tubes 5 sont rapidement enlevés pour les opérations de nettoyage et de manutention, étant insérés par encastrement et bloqués avec les équerres 18, qui sont appliqués sur les extrémités inférieures des tubes et fixés avec des visses, ou autres moyens appropriés, sur les supports 6.

On peut prévoir un ventilateur à moteur dans la partie postérieure de la chambre de cuisson, actionné alternativement dans les deux sens, pour rendre encore plus uniforme la distribution de température à l'intérieur du four.

Les tubes 5 pourraient également être disposés dans la paroie postérieure de la chambre de cuisson et avoir n'importe quelle forme de section transversale. En outre, ils pourraient être protégés par des grilles ou couverts en partie par des écrans disposés n'importe comment.

- 6 -

Revendications

1. Four pour pâtisserie, boulangerie et rôtisserie en général, avec chambre de cuisson à chauffage uniforme par l'intermédiaire d'échangeurs de chaleur distribués à l'interne, alimentés de gaz chauds produits par un brûleur à gaz-oil et semblables, caracterisé en ce que à l'intérieur de la chambre de cuisson du four, en position latérale ou en correspondance avec la paroie postérieure, des tubes métalliques verticaux ou idem sont disposés, parcourus à leur interne par des gaz chauds produits par un brûleur.

2. Four selon 1 caractérisé en ce que des gaz chauds, produits par le brûleur disposé dans la partie supérieure du four, grâce à la pression avec laquelle ils sont injectés et grâce à la poussée d'un ventilateur, descendent vers le bas à travers un interstice et arrivent au collecteur de distribution inférieur pour ensuite remonter, à travers les tubes verticaux, au collecteur de réception supérieur.

3. Four selon 1 et 2, caractérisé en ce que une partie des gaz est ensuite évacuée à travers une sortie se trouvant dans la zone de température la plus basse, alors que la partie restante est remise en circulation et réchauffée de nouveau par la chaudière, qui en même temps est ainsi opportunément refroidie.

4. Four selon 1, 2 et 3, caractérisé en ce que avec la disposition adoptée on obtien une très bonne distribution de chaleur à l'intérieur du four, une dispersion de chaleur minimale, air toujours propre dans la chambre de cuisson et grande simplicité constructive et de manutention.

5. Four selon 1, 2, 3 et 4, caractérisé en ce que pour améliorer ultérieurement la distribution de température à l'intérieur du four, on peut prévoir dans la chambre de cuisson un agitateur à volets tournant alternativement dans les deux sens.

6. Four selon 1, 2, 3, 4 et 5, caractérisé en ce que les tubes métalliques, de n'importe quelle forme apte à ce but, sont facilement et rapidement démontables pour les opérations de nettoyage et de manutention, et peuvent être protégés par une grille ou par un blindage partiel.

0055792

FIG.1

FIG.2

)) Office européen
des brevets

**RAPPORT DE RECHERCHE EUROPEENNE**  EP 81 10 4033

Numéro de la demande

| Catégorie | Citation du document avec indication, en cas de besoin, des parties pertinentes | Revendica-tion concernée |
|---|---|---|
| X | <u>GB - A - 1 144 742</u> (MOORWOOD VUL-CAN LIMITED) | |
| | * Document en entier * | 1,6 |
| | -- | |
| A | <u>FR - A - 443 210</u> (ALLAN) | |
| | * Figures 3 et 4 * | 1 |
| | -- | |
| A | <u>DE - C - 569 339</u> (OTTO SCHMIDT) | |
| | * Figure unique * | 3 |
| | -- | |
| A | <u>GB - A - 200 614</u> (PROCTER, WALTON) | |
| A | <u>DE - C - 668 188</u> (ALOIS LINDER) | |
| | * Revendication 1 * | 5 |
| | -- | |
| A | <u>GB - A - 478 682</u> (OTTO SCHMIDT) | |
| | ---- | |

**DOCUMENTS CONSIDERES COMME PERTINENTS**

**CLASSEMENT DE LA DEMANDE (Int. Cl. 3)**

A 21 B 1/10

**DOMAINES TECHNIQUES RECHERCHES (Int. Cl. 3)**

A 21 B
F 24 C

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 12-02-1982 | WETZEL |